# EUROPEAN PATENT APPLICATION

(11) **EP 2 060 452 A2**
(43) Date of publication of application: **20.05.2009**
(21) Application number: 08169400.2
(22) Date of filing: 19.11.2008
(51) Int. Cl.: B60R 25/10

(54) **Apparatus for satellite location**

(30) Priority: 19.11.2007 IT TV20070185
(71) Applicant: New Tech S.R.L., 35010 Santa Giustina In Colle (IT)
(72) Inventor: Ferro, Alfonso, I-35010, Santa Giustina in Colle (PD) (IT); Fior, Diego, I-31030, Castello di Godego (TV) (IT)
(74) Representative: Sarpi, Maurizio

(57) **Abstract**

An apparatus for satellite location and recording of videos/images, designed to be installed on board a vehicle (4), which enables recording of video images regarding a road accident or a theft or a robbery and the real-time transmission to an operating centre (5).

## Description

The present invention concerns an innovative electronic apparatus for satellite location with recording of videos/images for vehicles in general.

Recently, there has increasingly been felt the need, on the part of the consumer and, in particular, on the part of the insurance companies, for innovative solutions that will enable verification and ascertainment of the dynamics and the actual civil liability of a road accident. This would enable qualification and quantification, with extreme precision, of the exact dynamics of the road accident.

The recent introduction of "direct compensation", which is the new procedure of compensation for damages in the case of road accident, envisages that the persons insured may obtain the compensation directly from their own insurance company. This new procedure should guarantee a reduction of the tariffs, a speeding-up of the payment of compensation, and also a reduction of litigation. However, some norms of application risk reducing these important targets in so far as some constraints set by the "non-exchange" of the data regarding compensation, combined with the forfeited criterion of contribution and withdrawal from the so-called "clearinghouse" can lead to results even different from the ones expected or hoped for, causing distortions that rebound upon the tariffs of the persons insured. This mechanism of concurrence to and withdrawal from the "clearinghouse" in the absence of adequate checks and possible corrective action, may risk causing distorting aspects and a de-responsibilization of the insurance companies, feeding an artificial explosion of the malus, which means, as is known, a marked increase in the premia in subsequent years for the person insured even in the absence of an effective contributory negligence.

Basically, the new procedure of "direct compensation" in the case of a road accident, defined by the insurance companies themselves as a major step forward for unmasking the continuous frauds on compensation, cannot be sufficiently and correctly used.

In 2005, ISVAP (Istituto per la Vigilanza sulle Assicurazioni Private e di interesse collettivo - Institute for vigilance on private insurance and collective interest) introduced on the Italian market the project known as "check box" (an electronic device, installed on board the vehicle, having inside it a GSP, a GSM or GSM-GPRS locator system), which starts with the destination, by the Ministry of Economic Development, of the sum of seven million Euro to implement a pilot project for monitoring the journeys made by and the accident rate of private motor vehicles, aimed at containing the automobile-insurance tariffs (RCA - Responsabilità Civile Auto - Civil liability of automobiles) through the use of devices for vehicle location and control of vehicle speed.

The task of implementing the project has been entrusted by the Ministry to ISVAP: a convention has regulated the modalities for conducting the tests. The supplier has been selected by ISVAP through an invitation for tenders at a European level. As many as twelve insurance companies operating in the automobile-insurance sector have taken part in the project.

The advantages of the project envisage installation, maintenance, and possible de-installation of the devices on 17,100 vehicles selected from among the ones circulating in the five regional capitals that, according to the data processed by ISVAP, present the highest accident rates, largest resident population, and highest traffic density, namely, Turin, Milan, Rome, Naples and Palermo. The test period will last three years.

The use of devices for detection of the journeys made (distance, type of road, and driving times) and of the acceleration in the event of road accident or crash enables the insurance companies to:
personalize insurance cover in relation to a more objective measurement of the risk profile of the person insured;
ascertain with greater rapidity and precision the circumstances of the accident, containing the administrative costs and countering any possible fraudulent conduct.

The participation of the consumer in the project is then altogether free of charge and voluntary and guarantees a discount of at least 10% on the automobile-insurance premium for the entire duration of the project.

The data gathered on the journeys made do not enable location of the participants in so far as they are aggregate data on the use of the vehicles according to the time of day, type of vehicles, distances travelled, etc.

There is, instead, a precise detection for the events of crashes in the time interval that precedes and immediately follows the event, which renders it possible to arrive at the force of impact and the position of the vehicles involved.

The characteristics of the device referred to as "check box" (equipped with GSM/GPRS and GPS technology) is moreover able to:
- send to the operating centre the data regarding the journey made by the vehicle and, in the case of impact, thanks to a purposely provided accelerometer, transmit to the same operating centre an alarm signal;
- activate the emergency and breakdown services in the case of accident thanks to the operating centre, which, once the alarm signal has been received, contacts the driver and, if necessary, sends said emergency and breakdown vehicles;
- in the case of accident, the speed and the acceleration are stored for some seconds before and after the event;
- in the case of theft, the apparatus enables the vehicle to be traced.

It is evident that said characteristics are, without any doubt, elements that enable monitoring of a series of events.

However, the devices described previously and the ones currently on the market present a series of disadvantages.

A first disadvantage is represented by the fact that said devices are unable to record the video images at the moment of the road accident, images that would enable ascertainment of the exact dynamics and identification of the actual liability of the drivers of the vehicles involved.

A second disadvantage is represented by the fact that the location devices of a known type are without means for storing images, and this does not contribute to bringing out, in a clear and significant way, the continuous frauds not only on the accidents, but also for the cases regarding infringements of the highway code, such as, for example, failure to give precedence, going through the traffic lights, overtaking in a stretch of road where this is not allowed, encroaching on the carriageway, turning round on a stretch of road where this is not allowed, or else also in cases where the vehicle has gone off the road.

A third disadvantage regards theft of the vehicle. In fact, even though the location devices of a known type are able to locate the correct position of the vehicle and warn the forces of order, they are not able to stop the engine.

The main purpose of the present invention is to overcome the aforesaid disadvantages by providing an innovative apparatus for satellite location and recording of videos/images, with characteristics not only based upon GSM/GPRS and GPS technology but also upon the UMTS technology, enabling real-time storage of video images.

Advantageously, the storage of video images provides useful and indispensable elements that enable not only an immediate visual check, and hence mathematical and not hypothetical certainty, but also the correct interpretation of what has actually occurred both regarding the accidents and the infringements of the highway code.

A better understanding of the invention will emerge from the ensuing detailed description and with reference to the attached figures, which illustrate a preferred embodiment thereof purely by way of example.

In the drawings:

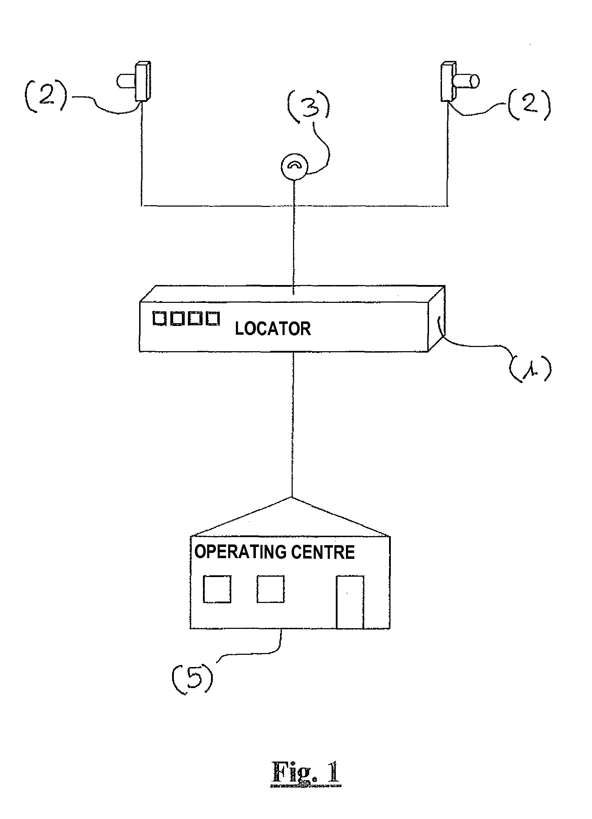

Figure 1 is a schematic view exemplifying a preferred embodiment of the apparatus for satellite location and recording of videos/images, forming the subject of the invention, comprising a satellite-locating and video-recording processing unit and video cameras connected to said unit, as well as a pushbutton for sending an SOS, which is also connected to said unit;

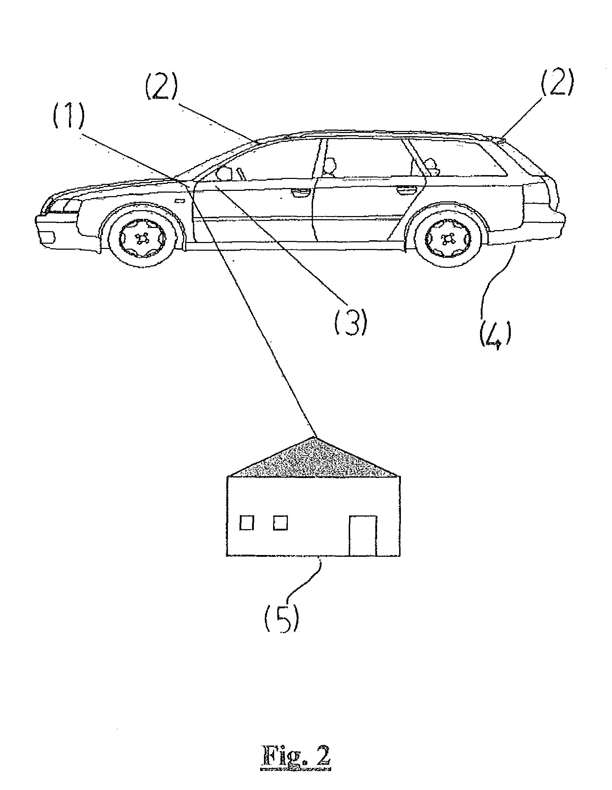

Figure 2 is a schematic three-dimensional view of the apparatus installed in a vehicle connected in real time to an operating centre; and

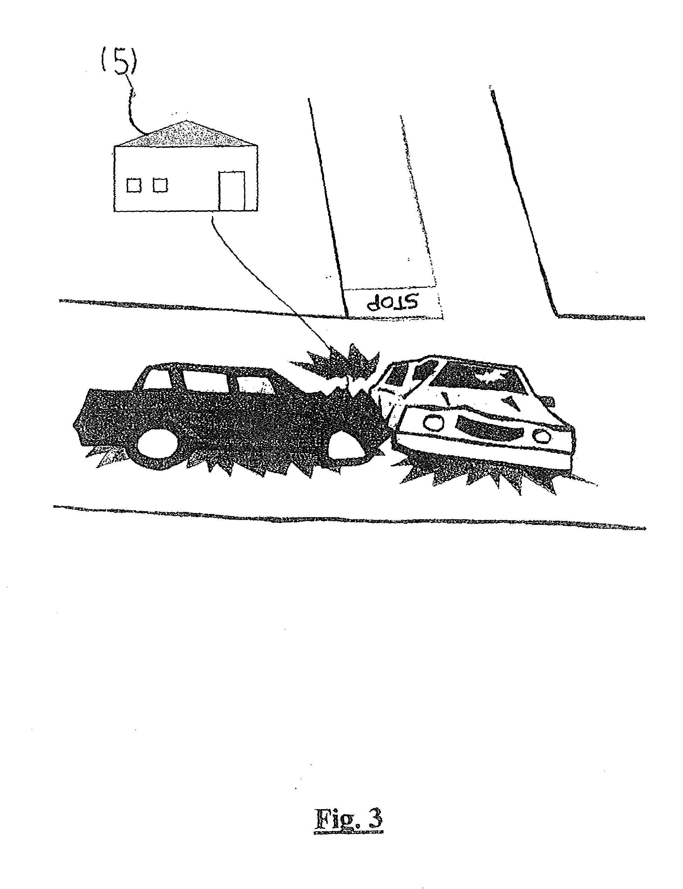

Figure 3 shows schematically operation of the apparatus before, during, and after a road accident, with the simultaneous sending of images to the operating centre.

With reference to the figures, an apparatus for satellite location and recording of videos/images 1 is provided, designed to be installed on any vehicle 4 and constantly connected via GSM/GPRS/UMTS to an operating centre 5 to enable viewing of the circumstances that have determined a road accident, or theft, or robbery.

According to a peculiar characteristic of the invention, it is envisaged that the location apparatus is equipped with a software that implements UMTS technology and a non-volatile fixed memory, which enables recording and storage of preferably one or more minutes of film during the road accident, or theft, or robbery.

Said location apparatus is equipped with:
- at least one sensor for measuring accelerations, or accelerometer, designed to detect a road accident or theft, and preferably a robbery-alert pushbutton;
- means for acquisition of images;
- a unit for processing the images acquired, designed for permanent storage of a film having a given duration that starts at an instant t₁ preceding the road accident or the theft or the robbery and terminates at an instant t₂ subsequent to said road accident, or theft, or robbery;
- means for sending the images stored to an operating centre 5, preferably in real time and in compressed mode, through the GSM/GPRS/UMTS data channel;
   said means for acquisition of images being connected to said processing unit.

Said sensor for the detection of a road accident, or theft, or robbery is preferably located in the apparatus.

In the example described, the instant t₁ is comprised between five minutes and thirty seconds prior to the road accident, or theft, or robbery, and the instant t₂ is comprised between thirty seconds and five minutes subsequent to said road accident, or theft, or robbery.

The recording of the film regarding the road accident, or theft, or robbery is sent, with said means for sending the images acquired, via GSM or GPRS or UMTS technology.

The UMTS technology present in the software of the location apparatus is currently the third-generation mobile-telephone technology, which is the successor of GSM technology.

UMTS technology, which is not present in the location systems of a known type, uses the W-CDMA (Wideband - Code-Division Multiple-Access) standard, which functions as a wideband and spread-spectrum interface, based upon direct-sequence CDMA (Code-Division Multiple-Access) technology.

Thanks to said innovative implementation, the W-CDMA reaches higher speeds and enables management of a larger number of users as compared to the TDMA (Time-Division Multiple-Access) technique used by the standard GSM network.

The means for acquisition of the images comprise one or more video cameras 2 set within the passenger compartment of the vehicle 4.

In the preferred embodiment, provided in the passenger compartment are at least two video cameras 2 that frame the road, and two further video cameras can be provided for framing the driver and the passenger so as to be activated only in the case of theft, or road accident, or robbery. In the case of theft or robbery, the video cameras film the outside of the vehicle, and only when the alarm of the vehicle goes off do the video cameras film the inside of the vehicle itself.

Said video cameras 2 are preferably high-sensitivity ones, such as, for example, the ones known as "pin-hole video cameras".

In the case where the vehicle 4 is not able to supply the location apparatus 1 electronically on account of the violent impact received in the accident, it is envisaged that the location apparatus 1 will be supplied electronically by an independent source, installed inside the location apparatus 1, enabling the video cameras 2 to receive a stabilized supply via a standby battery.

The components that characterize the innovative apparatus for satellite location and recording of videos/images 1 enable precise determination of the dynamics of a road accident by recording a set of information, such as the speed of the vehicle 4 at the moment of impact, which can be calculated through the accelerometric sensor, the angle at which the first impact occurs, and the evolution of the movement of the vehicle 4 subsequent to impact. For this purpose, said accelerometer detects the accelerations according to the three mutually perpendicular directions.

Evidently, the accelerations detected by the sensor in the case of road accident or theft also comprise the accelerations that occur when the vehicle 4 is being pulled or towed.

According to the invention, also an integrated GPS module is provided, designed to supply the geographical position of the vehicle 4 to establish the path, mileage, as well as the speed of the vehicle itself.

In addition, the apparatus so far described is designed to interact with the operating centre 5 through a software that manages communication means that implement GSM or GPRS or UMTS technology, as well as the data that come from the GPS device for sending to said operating centre 5 all the data detected.

It is preferable for the operating centre 5 to be equipped with a software for converting the data received into functions that are visible by the operator and for storing them in a purposely provided fixed memory.

Consequently, it is possible to determine whether a vehicle 4 has been bumped into or whether it has bumped into another vehicle, on which side it has been hit, the intensity of the impact received or imparted.

In the case of a pile-up, it is possible to determine whether the vehicle 4 has been first run into and subsequently has run into another vehicle, or else the exact opposite.

In any circumstance, the driver of the vehicle 4 is able to communicate directly with the operating centre 5 through an SOS pushbutton 3 provided inside the vehicle 4 so as to enable the immediate sending of emergency and breakdown vehicles.

In the case where the road accident is violent, or also in the case of theft or robbery, the location apparatus 1 transmits an alarm signal to the operating centre 5 via a further accelerometric (of movement) sensor or a purposely provided emergency pushbutton.

In the case of theft of the vehicle 4, the location apparatus 1 is able to send a signal to the operating centre 5.

In addition, in the case of theft, the operating centre 5 is able to stop the engine of the vehicle 4, thus hindering the theft in progress. For this purpose, the apparatus is equipped with means of a known type for switching off the engine of the vehicle 4.

Advantageously, the location apparatus can be remotely updated (via GSM/GPRS/UMTS directly by the operating centre) or through a USB-cable connection (directly on the vehicle).

In both cases, a "software serial number" is provided so that the owner of the vehicle 4 cannot tamper with the apparatus in order to hide his own possible responsibility or errors. At any moment, via said software serial number, from the operating centre 5 it is possible to monitor the vehicle 4 constantly and identify any possible attempts to tamper with the location apparatus installed on the vehicle itself.

As already mentioned, the main advantage of the location apparatus according to the present invention consists in the possibility of viewing the circumstances that have characterized a road accident, or a theft, or a robbery, ascertaining with extreme precision what has happened, and consequently the possibility of delineating, in the case of an accident, the actual civil liability of the drivers of the vehicles involved in the accident.

A further advantage consists in the possibility of hindering the theft by stopping the engine of the vehicle 4.

Finally, yet a further advantage is represented by the fact that, via said location apparatus, it is possible to discover any possible fraud to the detriment of the drivers.

The present invention has been described and illustrated in a preferred embodiment, but it is evident that a person skilled in the sector may make technically equivalent modifications and/or replacements thereto, without this implying any departure from the sphere of protection of the present industrial patent right.

## Claims

1. An apparatus for satellite location and recording of videos/images (1), designed to be installed on board a vehicle (4), **characterized in that** it comprises:
- at least one sensor for measuring accelerations or accelerometer designed to detect a road accident or theft;
- means for acquisition of images;
- a unit for processing the images acquired, designed to store permanently a film having a given duration that starts at an instant t₁ preceding the road accident, or theft, or robbery and terminates at an instant t₂ subsequent to said road accident, or theft, or robbery; and
- means for sending the images stored to an operating centre 5, preferably in real time, through the GSM/GPRS/UMTS data channel;
where said image-acquisition means are connected to said processing unit; said apparatus being constantly connected via GSM/GPRS/UMTS to said operating centre (5).

2. The apparatus according to the preceding claim, **characterized in that** the images acquired are sent to said operating centre (5) in real time.

3. The apparatus according to Claim 1,
**characterized in that** the instant t₁ is comprised between five minutes and thirty seconds prior to the road accident, or theft, or robbery and the instant t₂ is comprised between thirty seconds and five minutes subsequent to said road accident, or theft, or robbery.

4. The apparatus according to Claim 1,
**characterized in that** said sensor is designed to detect the angle with which the first impact occurs, as well as the evolution of the movement of the vehicle (4) subsequent to the impact itself; there moreover being provided an integrated GPS module designed to supply the geographical position of the vehicle (4) to establish the path, mileage, and speed.

5. The apparatus according to one of the preceding claims, **characterized in that** it is designed to interact with the operating centre (5) through a software that manages communication means that implement GSM or GPRS or UMTS technology, as well as the data that come from a GPS device for sending the data detected to said operating centre (5).

6. The apparatus according to Claim 1,
**characterized in that** the image-acquisition means comprise at least one or more video cameras (2) set within the passenger compartment of the vehicle.

7. The apparatus according to the preceding claim, **characterized in that** at least two video cameras (2) are provided that frame the road, and two further video cameras can be provided for framing the driver and the passenger, which can be activated only in the case of theft, or road accident, or robbery.

8. The apparatus according to Claim 6 or Claim 7, **characterized in that** said video cameras (2) are high-sensitivity video cameras, such as, for example, the ones known as "pin-hole video cameras".

9. The apparatus according to one of the preceding claims, **characterized in that** it is equipped with a supply source independent of that of the vehicle (4) so that said apparatus is supplied independently of operation of the vehicle itself.

10. The apparatus according to Claim 1,
**characterized in that** it further comprises means for location of the vehicle (4), as well as means for stopping the engine of the vehicle itself upon command of the operating centre (5).

11. The apparatus according to Claim 5,
**characterized in that** the software is designed to be remotely updated.

12. The apparatus according to the preceding claim, **characterized in that** said software is designed to be updated by the operating centre (5).

13. The apparatus according to Claim 1,
**characterized in that** said accelerometer is designed to detect the accelerations according to three mutually perpendicular directions.

14. A vehicle comprising an apparatus for satellite location and recording of videos/images according to the preceding claims.

15. The vehicle according to the preceding claim, **characterized in that** it is equipped with a USB port to enable the software to be updated via a USB-cable connection, directly on the vehicle.

16. The vehicle according to Claim 14,
**characterized in that** it is equipped with a pushbutton (3) for sending a signal to the operating centre (5) to request help in the case of road accident or robbery; said pushbutton (3) being connected to the apparatus (1).

17. The vehicle according to Claim 14,
**characterized in that** it is equipped with means of a known type for stopping the engine upon command of the apparatus (1) received by the operating centre (5) via the data channel of the GSM or GPRS or UMTS connection.
